(19) Europäisches Patentamt
European Patent Office
Office européen des brevets

(11) Veröffentlichungsnummer: **0 206 059 B1**

(12) # EUROPÄISCHE PATENTSCHRIFT

(45) Veröffentlichungstag der Patentschrift: **11.03.92**

(21) Anmeldenummer: **86107753.5**

(22) Anmeldetag: **06.06.86**

(51) Int. Cl.5: **C08G 18/72**, C08G 18/79, C08G 18/48, C09J 107/02, C09J 123/00, C09J 109/00, C09J 175/04, C08G 18/70

(54) **In Wasser dispergierbare Polyisocyanat-Zubereitung und ihre Verwendung als Zusatzmittel für wässrige Klebstoffe.**

(30) Priorität: **15.06.85 DE 3521618**

(43) Veröffentlichungstag der Anmeldung:
**30.12.86 Patentblatt 86/52**

(45) Bekanntmachung des Hinweises auf die Patenterteilung:
**11.03.92 Patentblatt 92/11**

(84) Benannte Vertragsstaaten:
**BE DE FR GB IT NL SE**

(56) Entgegenhaltungen:
**EP-A- 0 019 844**
**EP-A- 0 061 628**
**US-A- 4 396 738**

(73) Patentinhaber: **BAYER AG**

**W-5090 Leverkusen 1 Bayerwerk(DE)**

(72) Erfinder: **Hombach, Rudolf, Dr.**
**Johann-Janssen-Strasse 24**
**W-5090 Leverkusen 1(DE)**
Erfinder: **Reiff, Helmut, Dr.**
**Paul-Klee-Strasse 68 i**
**W-5090 Leverkusen 1(DE)**
Erfinder: **Dollhausen, Manfred, Dr.**
**Herzogenfeld 21**
**W-5068 Odenthal(DE)**

EP 0 206 059 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine in Wasser dispergierbare Polyisocyanat-Zubereitung auf Basis bestimmter aliphatischer Polyisocyanate oder eines Gemischs aliphatischer Polyisocyanate, sowie die Verwendung dieser Polyisocyanat-Zubereitung als Zusatzmittel für wäßrige Klebstoffe auf Basis von in Wasser dispergierbaren Polymeren.

Es ist bekannt, Polyisocyanate als Zusatzmittel für Klebstoffe auf Basis von in organischen Lösungsmittel gelösten Polymeren zu verwenden. So setzt man z.B. Lösungen aus Natur- oder Synthesekautschuk oder Lösungen von Polyurethanen polyfunktionelle Polyisocyanate zu, um eine günstigere Haftung an vielen zu klebenden Werkstoffen, eine höhere Beständigkeit der Klebung in der Wärme und eine bessere Widerstandsfähigkeit gegen Chemikalien zu erzielen. Gemäß der Lehre der EP-A-0 061 628 gelingt es die klebetechnischen Eigenschaften von wäßrigen Klebstoffen auf Basis von in Wasser dispergierbaren Polymeren durch Zusatz hydrophil modifizierter aromatischer Polyisocyanate zu verbessern.

Diese Verbesserung reicht allerdings nicht aus, um die vom Markt geforderte Beanspruchungsgruppe B 4 nach DIN 68 602 zu erreichen. Holzklebungen, die mit Polyvinylacetat-Klebstoffen gemäß der Lehre der EP-A-0 061 628 hergestellt werden, können daher nicht in Innenräumen mit extremen Klimaschwankungen und Wassereinwirkungen (Hallenbäder, Duschkabinen), sowie bei Außenanwendungen mit hohen klimatischen Einflüssen (z.B. Fenster, Außentüren, Leitern, Treppen) verwendet werden. Dies gelingt bislang nur durch Zusatz toxikologisch bedenklicher Chrom-(III)-salze, die außerdem noch zu einem starken und unerwünschten Abfall der Viskosität der Klebstoffe führen. Ein weiterer Nachteil der gemäß der Lehre von EP-A-0 061 628 modifizierten Klebstoffe, beispielsweise jenen auf Basis von wäßrigen Polyurethandispersionen ist die für viele praktische Anwendungen zu geringe Wärmefestigkeit der resultierenden Verklebungen von ca. 75 ° C (vgl. nachstehendes Vergleichsbeispiel). Falls derartige modifizierte Polyurethan-Dispersionsklebstoffe beispielsweise bei der Herstellung von Autoseitenteilen zum Kaschieren der Holzfaserpappe mit einer PVC-Folie eingesetzt werden, so muß dieser Verbund eine Wärmelagerung bei mindestens 90 ° C ohne Belastung überstehen.

Aus EP-A-19844 war es auch bekannt, in Wasser dispergierbare Polyisocyanat-Zubereitungen, die

a) aliphatische Polyisocyanate und

b) eine die Dispergierbarkeit des Polyisocyanats in Wasser gewährleistende Menge eines Emulgators, enthalten, herzustellen.

Derartige Zubereitungen werden als Bindermittel, z.B. bei der Herstellung von Formkörpern verwendet.

Der vorliegenden Erfindung lag die Aufgabe zugrunde, für bestimmte Klebstoffsysteme die klebetechnischen Eigenschaften zu verbessern.

Gegenstand der Erfindung ist die Verwendung von in Wasser dispergierbaren Polyisocyanat-Zubereitungen einer mittleren NCO-Funktionalität von 2,0 bis 3,5 als Zusatzmittel für wäßrige Klebstoffe auf Basis von in Wasser dispergierten Polymeren, dadurch gekennzeichnet, daß

a) die Polyisocyanat-Zubereitung aliphatische Polyisocyanate ausgewählt aus der Gruppe bestehend aus Isocyanuratgruppen aufweisenden Polyisocyanaten auf Basis von 1,6-Diisocyanatohexan und/oder von 1-Isocyanato-3,3,5-trimethyl-5isocyanatomethylcyclohexan, Uretdiondiisocyanaten auf Basis dieser einfachen Diisocyanate, Urethan- und/oder Allophanatgruppen aufweisenden Polyisocyanaten auf Basis dieser einfachen Diisocyanate, Biuretgruppen auf weisenden Polyisocyanaten auf Basis von 1,6-Diisocyanatohexan, Bis-(6-isocyanatohexyl)-oxadiazintrion und Gemischen dieser Polyisocyanate und

b) eine die Dispergierbarkeit der Polyisocyanate gewährleistende Menge eines Emulgators

enthält, wobei der Emulgator b) ein Umsetzungsprodukt eines aliphatischen Polyisocyanats mit einem ein- oder mehrwertigen, nicht-ionischen Polyalkylenether-Alkohol mit mindestens einer, mindestens 10 Ethylenoxideinheiten aufweisenden Polyetherkette ist, und

c) daß der wäßrige Klebstoff aus einer gegebenenfalls in der Klebstoff-Technologie übliche Hilfs- und Zusatzmittel enthaltenden wäßrigen Dispersion mit einem Feststoffgehalt von 10 bis 65 Gew.-%, ausgewählt aus der Gruppe bestehend aus Naturlatex, wäßrigen Dispersionen von Homo- oder Copolymerisaten olefinisch ungesättigter Monomerer und wäßrigen Polyurethandispersionen besteht.

Gegenstand der Erfindung sind weiterhin in Wasser dispergierbare Polyisocyanat-Zubereitung einer mittleren NCO-Funktionalität von 2,0 bis 3,5, dadurch gekennzeichnet, daß sie

a) Uretdiondiisocyanate auf Basis von 1,6-Diisocyanatohexan und/oder von 1-Isocyanato-3,3,5-trimethyl-5-isocyanatomethylcyclohexan und/oder Bis-(6-isocyanatohexyl)-oxadiazintrion, gegebenenfalls im Gemisch mit weiteren aliphatischen Polyisocyanaten sowie

b) eine die Dispergierbarkeit der Polyisocyanate gewährleistende Menge eines Emulgators

enthält, wobei der Emulgator b) ein Umsetzungsprodukt eines aliphatischen Polyisocyanats mit einem ein- oder mehrwertigen, nicht-ionischen Polyalkylenether-Alkohol mit mindestens einer, mindestens 10 Ethylenoxideinheiten aufweisenden Polyetherkette ist.

Die erfindungsgemäß zu verwendenden Polyisocyanat-Zubereitungen weisen eine (mittlere) NCO-Funktionalität von 2,0 bis 3,5 auf und einen NCO-Gehalt von 5-30 %, vorzugsweise 10-25 % auf. Ihre Dispergierbarkeit in Wasser wird durch einen hierzu ausreichenden Gehalt an geeigneten Emulgatoren gewährleistet.

Bei den emulgatorfreien Polyisocyanaten a) handelt es sich um ein aliphatisches Polyisocyant oder um ein Gemisch aliphatischer Polyisocyanate einer (mittleren) NCO-Funktionalität von 2,0 bis 3,5. Sie weisen im allgemeinen einen NCO-Gehalt von 5-30 %, vorzugsweise von 10-25 Gew.-% auf.

Aliphatische Polyisocyanate im Sinne der Erfindung sind:

1. Isocyanuratgruppen aufweisende Polyisocyanate auf Basis von 1,6-Diisocyanatohexan und/oder 1-Isocyanato-3,3,5-trimethyl-5-isocyanatomethyl-cyclohexan (Isophorondiisocyanat = IPDI). Die Herstellung derartiger Isocyanuratgruppen aufweisender Polyisocyanate ist beispielsweise in DE-PS 2 616 416, EP-OS 3765, EP-OS 10 589, EP-OS 47 452, US-PS 4 288 586 oder US-PS 4 324 879 beschrieben. Bei den als Komponente a) geeigneten Isocyanato-Isocyanuraten handelt es sich somit insbesondere um einfache Tris-isocyanatoalkyl- (bzw. -cycloalkyl-)isocyanurate der Formel

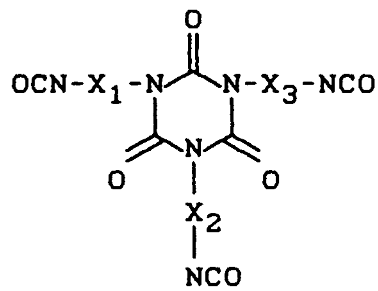

bzw. deren Gemische mit ihren höheren, mehr als einen Isocyanuratring aufweisenden Homologen, wobei in dieser Formel $X_1$, $X_2$ und $X_3$ den, dem Ausgangsdiisocyanat (1,6-Diisocyanatohexan bzw. IPDI) zugrundeliegenden Kohlenwasserstoffrest bedeuten. Die Isocyanato-Isocyanurate weisen im allgemeinen einen NCO-Gehalt von 10 bis 30, vorzugsweise 15 bis 25 Gew.-% und eine (mittlere) NCO-Funktionalität von 3 bis 3,5 auf.

Aliphatische Polyisocyanate im Sinne der Erfindung sind ferner:

2. Uretdiondiisocyanate mit aliphatisch und/oder cycloaliphatisch gebundenen Isocyanatgruppen der Formel

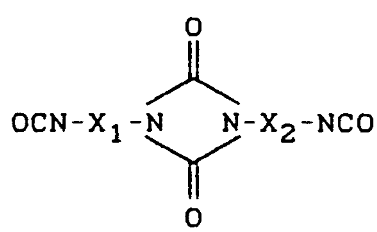

in welcher

$X_1$ und $_2$ für die die Isocyanatgruppen von Hexamethylendiisocyanat und/oder von IPDI verknüpfenden Kohlenwasserstoffreste stehen.

Die Uretdiondiisocyanate können in den erfindungsgemäßen Zubereitungen als alleinige Komponente a) vorliegen oder im Gemisch mit anderen aliphatischen Polyisocyanaten, insbesondere den unter 1) genannten Isocyanuratgruppen aufweisenden Polyisocyanaten eingesetzt werden.

Aliphatische Polyisocyanate im Sinne der Erfindung sind ferner:

3. Biuretgruppen aufweisende Polyisocyanate repräsentiert durch Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine (mittlere) NCO- Funktionalität von 3 bis 3,5 auf.

Aliphatische Polyisocyanate im Sinne der Erfindung sind ferner:

4. Urethan- und/oder Allophanatgruppen aufweisende Polyisocyanate wie sie durch Umsetzung von

überschüssigen Mengen an Hexamethylendiisocyanat oder an IPDI mit einfachen mehrwertigen Alkoholen wie z.B. Trimethylolpropan, Glycerin, 1,2-Dihydroxypropan oder deren Gemischen erhalten werden können. Diese, als erfindungsgemäße Komponente a) geeigneten Urethan- und/oder Allophanatgruppen aufweisenden Polyisocyanate weisen im allgemeinen einen NCO-Gehalt von 12 bis 20 Gew.-% und eine (mittlere) NCO-Funktionalität von 2,5 bis 3 auf.

Aliphatische Polyisocyanate im Sinne der Erfindung sind ferner:

5. Oxadiazintriongruppen enthaltende Polyisocyanate der Formel

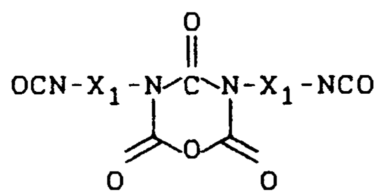

in welcher

$X_1$ für einen Hexamethylenrest steht, herstellbar aus 1,6-Diisocyanatohexan und Kohlendioxid.

Die unter 1. bis 5. genannten aliphatischen bzw. cycloaliphatischen Polyisocyanate können selbstverständlich auch als beliebige Gemische in den erfindungsgemäßen Zubereitungen vorliegen. Den gemachten Ausführungen entsprechend steht der Begriff "aliphatische Polyisocyanate" im Rahmen der Erfindung für solche Polyisocyanate, deren Isocyanatgruppen mit aliphatischen oder cycloaliphatischen Kohlenstoffatomen verknüpft sind.

Geeignete Emulgatoren b) sind insbesondere Umsetzungsprodukte aliphatischer Polyisocyanate mit nicht-ionische Ethylenoxideinheiten aufweisenden Polyetheralkoholen. Zur Herstellung der Emulgatoren geeignete Polyisocyanate sind neben den bereits obengenannten Polyisocyanaten auch beliebige andere aliphatische Diisocyanate. Zur Herstellung der geeigneten Polyetheralkohole sind beliebige Alkoxylierungsprodukte, vorzugsweise ein- oder auch mehrwertige Startermoleküle wie z.B. Methanol, n-Butanol, Cyclohexanol, 3-Methyl-3-hydroxymethyloxetan, Phenol, Ethylenglykol, Propylenglykol, Anilin, Trimethylolpropan oder Glycerin, die mindestens eine, mindestens 10, im allgemeinen 10 bis 70, vorzugsweise 15 bis 60 Ethylenoxideinheiten aufweisende, Polyetherkette enthalten. Die in den Emulgatoren vorliegenden Polyetherketten weisen im allgemeinen 10 bis 70, vorzugsweise 15-60, Alkylenoxideinheiten auf und stellen entweder reine Polyethylenoxid-Ketten oder gemischte Polyalkylenoxid-Ketten dar, deren Alkylenoxideinheiten zu mindestens zu 60 % aus Ethylenoxideinheiten bestehen, von diesem jedoch, wie gesagt, mindestens 10 enthalten. Die entsprechenden einwertigen Polyetheralkohole sind besonders gut zur Herstellung der Emulgatoren geeignet.

Geeignete, jedoch weniger bevorzugte Emulgatoren sind auch die entsprechenden Umsetzungsprodukte aliphatischer Polyisocyanate mit im Sinne der Isocyanat-Additionsreaktion mono- bis trifunktionellen Verbindungen mit gegenüber Isocyanatgruppen reaktionsfähigen Gruppen, die neben diesen gegenüber Isocyanatgruppen reaktionsfähigen Gruppen noch eingebaute hydrophile Zentren wie beispielsweise Carboxylat-, Sulfonat- oder Ammoniumgruppen aufweisen.

Die Herstellung der Emulgatoren erfolgt durch Umsetzung der aliphatischen Polyisocyanate mit den hydrophilen Verbindungen mit gegenüber Isocyanatgruppen rekationsfähigen Gruppen, vorzugsweise mit den genannten monofunktionellen nichtionisch hydrophilen Polyetheralkoholen in einem NCO/OH-Äquivalentverhältnis von mindestens 1:1, im allgemeinen von 2:1 bis ca. 1000:1. Insbesondere bei Verwendung von mehrwertigen Polyetheralkoholen wird in einem NCO/OH-Äquivalentverhältnis von mindestens 2:1 gearbeitet. Die Emulgatoren können entweder in einem getrennten Reaktionsschritt durch Umsetzung der genannten Ausgangsmaterialien hergestellt und anschließend mit dem in eine emulgierbare Form zu überführenden Polyisocyanat abgemischt oder in situ dergestalt hergestellt werden, daß man das in eine emulgierbare Form zu überführende aliphatische Polyisocyanat mit einer entsprechenden Menge des Polyetheralkohols abmischt, wobei spontan eine erfindungsgemäße Polyisocyanat-Zubereitung entsteht, die neben unmodifiziertem aliphatischem Polyisocyanat den sich in situ aus der hydrophilen Verbindung mit gegenüber Isocyanatgruppen reaktionsfähigen Gruppen, vorzugsweise aus dem Polyetheralkohol und einem Teil des Polyisocyanats bildenden Emulgator enthält. Bei der erstgenannten Variante der separaten Herstellung der erfindungswesentlichen Emulgatoren werden diese vorzugsweise unter Einhaltung eines NCO/OH-Äquivalentverhältnisses von ca. 2:1 bis 6:1 hergestellt. Bei der Herstellung der Emulgatoren in situ kann selbstverständlich ein hoher Überschuß an Isocyanatgruppen innerhalb des obengenannten breiten Bereichs zur Anwendung gelangen. Die Menge des mit dem in eine emulgierbare Form zu überführenden

Polyisocyanat abzumischenden Emulgators bzw. die Menge des dem in eine emulgierbare Form zu überführenden Polyisocyanat zugesetzten Polyetheralkohole wird im allgemeinen so bemessen, daß in der letztlich erhaltenen, erfindungsgemäßen Polyisocyanat-Zubereitung 1 bis 12 Gew.-%, vorzugsweise 3 bis 8 Gew.-% an innerhalb von Polyetherketten angeordneten Ethylenoxideinheiten vorliegen. Die Herstellung der Emulgatoren bzw. die Herstellung der Polyisocyanat-Zubereitung erfolgt im allgemeinen bei bei mäßig erhöhter Temperatur, d.h. im Temperaturbereich von ca. 50 bis 130 ° C.

Die so erhaltenen Polyisocyanat-Zubereitungen werden vorzugsweise in Substanz der erfindungsgemäßen Verwendung zugeführt. Selbstverständlich kann man den Zubereitungen vor ihrer erfindungsgemäßen Verwendung auch geringe Mengen, d.h. beispielsweise 1 bis 10 Gew.-%, bezogen auf die lösungsmittelfreie Zubereitung, eines organischen Lösungsmittels wie z.B. Ethylacetat, Aceton oder Methylethylketon zusetzen, um die Viskosität zu reduzieren. Ferner ist es möglich, die erfindungsgemäßen Polyisocyanat-Zubereitungen in Form wäßriger Dispersionen mit einem Feststoffgehalt von ca. 10 bis 65 Gew.-% zu verarbeiten. Die Herstellung dieser Dispersionen bzw. Emulsionen erfolgt kurz vor der erfindungsgemäßen Verwendung durch einfaches Vermischen der spontan in Wasser dispergierbaren Polyisocyanat-Zubereitungen mit Wasser.

Die erfindungsgemäße Verwendung eignet sich zur Modifizierung von wäßrigen Klebstoffen auf Basis von wäßrigen Dispersionen eines Feststoffgehalts von 10 bis 65 Gew.-%, vorzugsweise 20 bis 60 Gew.-%, ausgewählt aus der Gruppe bestehend aus Naturlatex, wäßrigen Dispersionen von Homo- oder Copolymerisaten olefinisch ungesättigter Monomerer und den an sich bekannten wäßrigen Polyurethandispersionen. Diese Dispersionen können selbstverständlich die in der Klebstofftechnologie üblichen Hilfs- und Zusatzmittel enthalten.

Geeignete Dispersionen von Homo- oder Copolymerisaten olefinisch ungesättigter Monomerer sind z.B. an sich bekannte Dispersionen von Homo- oder Copolymerisaten auf Basis von Vinylestern von Carbonsäuren mit 2 bis 18, vorzugsweise 2 bis 4, Kohlenstoffatomen wie insbesondere Vinylacetat, gegebenenfalls mit bis zu 70 Gew.-% bezogen auf Gesamtmenge an olefinisch ungesättigten Monomeren, an anderen olefinisch ungesättigten Monomeren und/oder von Homo- oder Copolymerisaten von (Meth)Acrylsäureestern von Alkoholen mit 1 bis 18, vorzugsweise 1 bis 4, Kohlenstoffatomen wie insbesondere (Meth)Acrylsäure-, -methyl-, -ethyl-, -propyl-, -hydroxyethyl- oder -hydroxypropyl-estern, gegebenenfalls zusammen mit bis zu 70 Gw.-% an anderen olefinisch ungesättigten Monomeren und/oder Butadien-Styrol-Copolymerisaten mit einem Gehalt an Butadien von ca. 20 bis 60 Gew.-% und/oder von anderen Dien-Polymerisaten oder -Copolymerisaten wie Polybutadien oder Mischpolymerisaten von Butadien mit anderen olefinisch ungesättigten Monomeren wie z.B. Styrol, Acrylnitril und/oder Methacrylnitril und/oder wäßrige Dispersionen von Polymerisaten bzw. Copolymerisaten des 2-Chlor-butadien-1,3, gegebenenfalls mit anderen olefinisch ungesättigten Monomeren der oben beispielhaft genannten Art, z.B. solchen eines Chlorgehalts von ca. 30 bis 40 Gew.-%, insbesondere eines Chlorgehalts von ca. 36 Gew.-%.

Geeignete wäßrige Polyurethandispersionen sind solche der an sich bekannten Art, wie sie z.B. in US-PS 3 479 310, GB-PS 1 076 688, US-PS 4 108 814, US-PS 4 092 286, DE-OS 2 651 505, US-PS 4 190 566, DE-OS 2 732 131 oder DE-OS 2 811 148 beschrieben sind.

Die bei der erfindungsgemäßen Verwendung einzusetzenden wäßrigen Klebstoffe können die in der Klebstofftechnologie üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalze eingesetzt werden, wobei die Netzmittel im allgemeinen in Mengen von 0,2 bis 0,6 Gew.-%, bezogen auf Füllstoff, zugesetzt werden.

Weitere geeignete Hilfsmittel sind z.B. in Mengen von 0,01 bis 1 Gew.-%, bezogen auf Gesamtklebstoff, einzusetzende organische Verdickungsmittel wie z.B. Zellulose-Derivate, Alginate, Stärke oder Stärkederivate oder Polyacrylsäure oder in Mengen von 0,05 bis 5 Gew.-%, bezogen auf Gesamtklebstoff, einzusetzende anorganische Verdickungsmittel wie z.B. Bentonite.

Auch Fungizide zur Konservierung können den Klebstoffen zugesetzt werden. Diese kommen im allgemeinen in Mengen von 0,02 bis 1 Gew.-%, bezogen auf Gesamtklebstoff, zum Einsatz. Geeignete Fungizide sind beispielsweise Phenol- und Kresol-Derivate oder Zinn-organische Verbindungen oder andere, dem Fachmann bekannte Produkte.

Auch klebrig-machende Harze wie z.B. Naturharze oder modifizierte Harze wie Kolophoniumester oder synthetische Harze wie Phthalatharze können dem Klebstoffgemisch zugesetzt werden.

Auch Lösungsmittel wie beispielsweise Toluol, Xylol, Butylacetat, Methylethylketon, Ethylacetat, Dioxan oder deren Gemische oder Weichmacher wie beispielsweise solche auf Adipat-, Phthalat- oder Phosphat-Basis können den wäßrigen Klebstoffdispersionen zugesetzt werden.

Die erfindungsgemäß zu verwendenden, Polyisocyanat-Zubereitungen werden den wäßrigen Klebstoffen

im allgemeinen in einer Menge von 1 bis 20, vorzugsweise 2 bis 10 Gew.-%, bezogen auf das Bindemittel des wäßrigen Klebstoffs, zugesetzt.

Die so modifizierten wäßrigen Klebstoffe eignen sich zum Verkleben beliebiger Werkstoffe gleicher oder verschiedener Art, z.B. zum Verkleben von Holz und Papier, Kunststoffen, Textilien, Leder und anorganischen Materialien, wie Keramik, Steingut oder Asbestzement.

Der erfindungsgemäße Zusatz der Polyisocyanat-Zubereitungen zu den wäßrigen Klebstoffen bewirkt insbesondere eine deutliche Verbesserung der Wärmebeständigkeit, der Wasserfestigkeit und, im Vergleich zu entsprechenden Klebstoffen, denen Polyisocyanat-Zubereitungen auf Basis aromatischer Polyisocyanate zugesetzt worden sind, der Topfzeit.

Die nachfolgenden Beispiele dienen zur weiteren Erläuterung der Erfindung. Alle Prozentangaben beziehen sich auf Gewichtsprozente.

Ausgangsprodukte

Polyether 1

Auf n-Butanol gestarteter, monofunktioneller Polyethylenoxidpolyether vom Molekulargewicht 1145.

Polyether 2

Auf 3-Ethyl-3-hydroxymethyloxetan gestarteter monofunktioneller Polyethylenoxidpolyether vom Molekulargewicht 1210.

Polyether 3

Auf n-Butanol gestarteter, monofunktioneller Polyethylenoxid-polypropylenoxidpolyether vom Molekulargewicht 2150. Gehalt an Ethylenoxid: 80 %.

Polyether 4

Auf Glycerindimethylketal gestarteter Polyethylenoxidpolyether vom Molekulargewicht 840.

Polyisocyanat 1

Durch Trimerisierung eines Teils der Isocyanatgruppen von 1,6-Diisocyanatohexan hergestelltes, Isocyanuratgruppen aufweisendes Polyisocyanat, welches im wesentlichen aus Tris-(6-isocyanatohexyl)-isocyanurat und dessen höheren Homologen besteht, mit einem NCO-Gehalt von 21,6 %, einem Gehalt an monomerem Diisocyanat von <0,3 %, einer Viskosität bei 23 °C von 1700 mPa.s und einer mittleren NCO-Funktionalität von ca. 3,3.

Polyisocyanat 2

Biuretpolyisocyanat auf Basis von 1,6-Diisocyanatohexan, welches im wesentlichen aus N,N',N''-Tris-(6-isocyanatohexyl)-biuret und dessen höheren Homologen besteht, mit einem NCO-Gehalt von 21,0 %, einem Gehalt an monomerem 1,6-Diisocyanatohexan von <0,5 %, einer Viskosität bei 23 °C von 8500 mPa.s und einer mittleren NCO-Funktionalität von ca. 3,3.

Polyisocyanat 3

Gemisch aus dimerem und trimerem 1,6-Diisocyanatohexan, welches im wesentlichen aus einem Gemisch aus Bis-(6-isocyanatohexyl)-uretdion und Tris-(6-isocyanatohexyl)-isocyanurat besteht und bei 23 °C eine Viskosität von 150 mPa.s, einen NCO-Gehalt von 21,6 % und eine mittlere NCO-Funktionalität von 2,6 aufweist.

Polyisocyanat 4

Durch Umsetzung von 1,6-Diisocyanatohexan mit Kohlendioxid hergestelltes Bis-(6-isocyanatohexyl)-oxadiazintrion mit einem NCO-Gehalt von 20,6 %.

Polyisocyanat 5

Durch Trimerisierung von IPDI erhaltenes Isocyanato-Isocyanurat einer mittleren NCO-Funktionalität von ca. 3,3, 70 %ige Lösung in einem aromatischen Kohlenwasserstoffgemisch (R)Solvesso 100, NCO-Gehalt der Lösung: 11 %.

Polyisocyanat 6

Bis-(6-isocyanatohexyl)-uretdion mit einem NCO-Gehalt von 21,5 % und einer Viskosität bei 23° C von 80 mPa.s.

Beispiel 1

Zu 1000 g Polyisocyanat 1 fügt man unter Rühren 80,8 g auf 50° C erwärmten Polyether 1. Man erwärmt auf 110° C und hält 2,5 h bei dieser Temperatur. Nach Abkühlen erhält man ein klares, gelbes, in Wasser dispergierbares Harz mit einem NCO-Gehalt von 18,4 %. Viskosität: 2500 mPa.s (23° C)

Beispiel 2

Zu 500 g Polyisocyanat 1 gibt man unter Rühren 40 g Polyether 2 und rührt 2 h bei 100° C. Man erhält eine klare, gelbe, wasserdisoergierbare Polyisocyanuratzubreitung vom NCO-Gehalt 19,0 % und einer Viskosität von 2600 mPas (23° C).

Beispiel 3

Völlig analog zu Beispiel 2 erhält man mit 26,3 g Polyether 2 einen NCO-Gehalt von 19,7 % und eine Viskosität von 3200 mPa.s (23° C).

Beispiel 4

Man arbeitet wie in Beispiel 2 beschrieben, verwendet jedoch 55,4 g Polyether 2, man erhält so eine erfindungsgemäße Polyisocyanuratzubereitung mit einem NCO-Gehalt von 18,1 % und einer Viskosität von 1200 mPas (23° C).

Beispiele 5 bis 14

Die Herstellung von erfindungsgemäßen Polyisocyantzubereitungen erfolgt in Analogie zu Beispiel 1. Die Ausgangsmaterialien und die Eigenschaften der resultierenden Polyisocyanat-Zubereitungen sind in der nachstehenden Tabelle 1 zusammengefaßt.

**Tabelle 1**

| Beispiel | Polyisocyanat | Polyether | Polyether bez. auf Gesamtgew. (%) | NCO-Gehalt (%) gef. | Viskosität (mPa.s) |
|---|---|---|---|---|---|
| 5 | 1 | 4 | 5 | 19,6 | 1600 (46°C) |
| 6 | 2+3* | 2 | 10 | 19,3 | 1000 (23°C) |
| 7 | 1 | 3 | 10 | 19,2 | 2900 (23°C) |
| 8 | 4 | 3 | 10 | 18,6 | |
| 9 | 3 | 2 | 10 | 19,2 | 200 (23°C) |
| 10 | 4 | 3 | 20 | 15,6 | 2200 (23°C) |
| 11 | 2 | 2 | 5 | 19,5 | |
| 12 | 5 | 1 | 7,4 | 13,5 | 3900 (23°C) |
| 13 | 6 | 3 | 5 | 18,7 | 200 (23°C) |
| 14 | 3 | 1 | 7,5 | 19,5 | 220 (23°C) |

*) 1:1-Mischung der beiden Polyisocyanate

Vergleichsbeispiel gemäß der Lehre der EP-A-0 061 628

In einem 3 l Rührbecher mit Rückflußkühler werden unter Stickstoff zu 1870 g eines Polyisocyanatgemischs der Diphenylmethanreihe mit einem Gehalt an Diisocyanato-Diphenylmethan-Isomeren von ca. 60 % und einem Gehalt an höheren Homologen von ca. 40 % bei 40 °C in einem Guß 130 g der Verbindung der

Formel

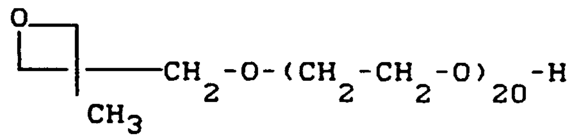

zugefügt. Nach 15 Minuten steigert man die Temperatur des Reaktionsgemischs auf 65 °C und hält 3 Stunden bei dieser Temperatur. Nach Abkühlen auf Raumtemperatur liegt eine Polyisocyanat-Zubereitung in Form einer klaren, braunen Lösung des in situ gebildeten Emulgators in überschüssigem Polyisocyanat vor. Der NCO- Gehalt der Zubereitung liegt bei ca. 28 %. Die mittlere NCO-Funktionalität liegt bei ca. 2,5, die Viskosität bei 650 mPa.s (23 °C).

Verwendungsbeispiele

Jeweils 5 g der Polyisocyanat-Zubereitungen gemäß Beispielen 1 bis 10 und gemäß Vergleichsbeispiel werden in 11 Parallelversuchen mit jeweils 100 g einer handelsüblichen wäßrigen Dispersion eines Vinylacetat-Maleinsäure-n-butylester- Copolymerisat mit einem Feststoffgehalt von 53% ((R)Mowilith DHW der Fa. Hoechst AG, Bundesrepublik Deutschland) in einem Becherglas von Hand vermischt. Nach 10 Sekunden Mischen wird jeweils eine homogene Mischung erhalten. Die Topfzeiten der resultierenden wäßrigen Klebstoffe werden in der nachstehenden Tabelle 2 aufgeführt.

Zwecks Herstellung von Verklebungen unter Verwendung dieser wäßrigen Klebstoffe werden nicht vorbehandelte Buchenholz-Probekörper mit dem Klebstoff eingestrichen. Innerhalb 15 Minuten nach Auftrag der Klebstoffe werden 2 Probekörper so zusammengelegt, daß eine überlappte Fläche von 2 $cm^2$ vorliegt und 24 h mit einem Druck von 3,0 MPa zusammengepreßt. Nach 7-tätiger Lagerung bei Raumtemperatur wird die Scherfestigkeit ermittelt. Dies erfolgt in einer Zugprüfmaschine mit einem Spindelvorschub von 100 mm/min. Die ermittelten Prüfwerte für die Scherfestigkeit werden ebenfalls in der nachstehenden Tabelle 2 aufgeführt.

In einer parallelen Versuchsserie werden entsprechende Verklebungen zwecks Prüfung der Kochwasserbeständigkeit nach Beanspruchungsgruppe B4 gemäß DIN 68 602 hergestellt. Hierzu werden die Prüfkörper nach 7-tägiger Lagerung im Normalklima 6 Stunden in kochendem Wasser gelagert. Nach anschließender 2-stündiger Lagerung in kaltem Wasser wird in nassem Zustand die Scherfestigkeit mit einem Spindelvorschub von 100 mm/minute ermittelt. Der geforderte Wert beträgt mindestens 4 $N/mm^2$. Die herbei ermittelten Meßdaten werden ebenfalls in Tabelle 2 aufgeführt.

In einer weiteren Versuchsserie werden in 11 Parallelversuchen jeweils 5 g der Polyisocyanat-Zubereitungen gemäß Beispielen 1-10 und gemäß Vergleichsbeispiel mit jeweils 100 g mit einer anionischen wäßrigen Polyurethandispersion mit einem Feststoffgehalt von 40%, einem Gehalt an Carboxylatgruppen von 2,4 Milliäquivalenten pro 100 g Feststoff und einem Gehalt an Sulfonatgruppen von 20 Milliäquivalenten pro 100 g Feststoff in einem Becherglas von Hand vermischt. Nach ca. 10 Sekunden liegt jeweils eine homogene Mischung der Komponenten vor.

Mit diesen Mischungen werden jeweils gemäß ASTM 816 D Klebungen hergestellt. Als zu verklebender Werkstoff diente ein 4 mm dickes PVC-Material mit einem Gehalt von 30 % Dioctylphthalat als Weichmacher.

Vor dem Aufbringen der Klebstoffe wurden die zu klebenden Oberflächen mit Schleifband der Körnung 40 gründlich gerauht. Die vom Schleifstaub befreiten Werkstoffe wurden mit einer ca. 0,1 mm dicken Klebstoffschicht versehen. Nach einer Ablüftzeit von 30 min. wurden die Klebstoffoberflächen durch Strahlungswärme innerhalb von 3 Sek. auf eine Temperatur von 80-85 °C gebracht. Danach werden die Klebstreifen so zusammengelegt, daß eine überlappte Fläche von 2,5 x 2,5 cm vorliegt. Die Prüfkörper werden 10 Sek. mit einem Druck von 0,4 MPa gepreßt.

Zur Ermittlung der Wärmefestigkeit nach ASTM 816 D wurden die jeweils 9 Tage bei Raumtemperatur gelagerten Prüfkörper einem Scherversuch unterworfen. Hierbei wird der Prüfkörper mit einer Masse von 11 kg belastet. Nach 20-minütigem Tempern bei 40 °C wird durch Erhöhen der Temperatur pro Minute um 0,25 °C die Temperatur ermittelt, bei der die Klebung versagt. Die erreichten Temperaturen sind ebenfalls in Tabelle 2 aufgeführt.

Tabelle 2

| Polyisocyanat-Zubereitung gemäß Beispiel | PU-Dispersion Wärmebeständigkeit nach ASTM 816 D | PVA-Dispersion Scherfestigkeit nach DIN 68602 bei RT N/mm² | PVA-Dispersion Kochwasserbeständigkeit nach DIN 68602 B4 N/mm² | Topfzeit |
|---|---|---|---|---|
| 1 | 89° | 14,5 | 4,6 | >8 h |
| 2 | 92° | 15,5 | 5,2 | >8 h |
| 3 | 94° | 14,2 | 5,6 | >8 h |
| 4 | 87° | 13,8 | 5,0 | >8 h |
| 5 | 92° | 14,8 | 4,3 | >8 h |
| 6 | 87° | 15,2 | 5,1 | >8 h |
| 7 | 89° | 14,0 | 5,6 | >8 h |
| 8 | 93° | 14,1 | 4,4 | >8 h |
| 9 | 97° | 14,2 | 5,2 | >8 h |
| 10 | 91° | 14,8 | 4,6 | >8 h |
| Vergleichsbeispiel | 75° | - | 1,1 | 3 h |
| ohne | 62° | - | 0 | - |

## Patentansprüche

1. Verwendung von in Wasser dispergierbaren Polyisocyanat-Zubereitungen einer mittleren NCO-Funktionalität von 2,0 bis 3,5 als Zusatzmittel für wäßrige Klebstoffe auf Basis von in Wasser dispergierten

Polymeren, dadurch gekennzeichnet, daß

a) die Polyisocyanat-Zubereitung aliphatische Polyisocyanate ausgewählt aus der Gruppe bestehend aus Isocyanuratgruppen aufweisenden Polyisocyanaten auf Basis von 1,6-Diisocyanatohexan und/oder von 1-Isocyanato-3,3,5-trimethyl-5isocyanatomethylcyclohexan, Uretdiondiisocyanaten auf Basis dieser einfachen Diisocyanate, Urethan- und/oder Allophanatgruppen aufweisenden Polyisocyanaten auf Basis dieser einfachen Diisocyanate, Biuretgruppen aufweisenden Polyisocyanaten auf Basis von 1,6-Diisocyanatohexan, Bis-(6-isocyanatohexyl)-oxadiazintrion und Gemischen dieser Polyisocyanate und

b) eine die Dispergierbarkeit der Polyisocyanate gewährleistende Menge eines Emulgators

enthält, wobei der Emulgator b) ein Umsetzungsprodukt eines aliphatischen Polyisocyanats mit einem ein- oder mehrwertigen, nicht-ionischen Polyalkylenether-Alkohol mit mindestens einer, mindestens 10 Ethylenoxideinheiten aufweisen den Polyetherkette ist, und

c) daß der wäßrige Klebstoff aus einer gegebenenfalls in der Klebstoff-Technologie übliche Hilfs- und Zusatzmittel enthaltenden wäßrigen Dispersion mit einem Feststoffgehalt von 10 bis 65 Gew.-%, ausgewählt aus der Gruppe bestehend aus Naturlatex, wäßrigen Dispersionen von Homo- oder Copolymerisaten olefinisch ungesättigter Monomerer und wäßrigen Polyurethandispersionen besteht.

**2.** In Wasser dispergierbare Polyisocyanat-Zubereitung einer mittleren NCO-Funktionalität von 2,0 bis 3,5, dadurch gekennzeichnet, daß sie

a) Uretdiondiisocyanate auf Basis von 1,6-Diisocyanatohexan und/oder von 1-Isocyanato-3,3,5-trimethyl-5-isocyanatomethylcyclohexan und/oder Bis-(6-isocyanatohexyl)-oxadiazintrion, gegebenenfalls im Gemisch mit weiteren aliphatischen Polyisocyanaten sowie

b) eine die Dispergierbarkeit der Polyisocyanate gewährleistende Menge eines Emulgators

enthält, wobei der Emulgator b) ein Umsetzungsprodukt eines aliphatischen Polyisocyanats mit einem ein- oder mehrwertigen, nicht-ionischen Polyalkylenether-Alkohol mit mindestens einer, mindestens 10 Ethylenoxideinheiten aufweisenden Polyetherkette ist.

## Claims

**1.** The use of water-dispersible polyisocyanate preparations having an average NCO functionality of 2.0 to 3.5 as an additive for water-borne adhesives based on polymers dispersed in water, characterized in that

a) the polyisocyanate preparation contains aliphatic polyisocyanates selected from the group consisting of isocyanurate polyisocyanates based on 1,6-diisocyanatohexane and/or 1-isocyanato-3,3,5-trimethyl-5-isocyanatomethyl cyclohexane, uretdione diisocyanates based on these simple diisocyanates, urethane and/or allophanate polyisocyanates based on these simple diisocyanates, biuret polyisocyanates based on 1,6-diisocyanatohexane, bis-(6-isocyanatohexyl)-oxadiazine trione and mixtures of these polyisocyanates and

b) a quantity of an emulsifier which guarantees the dispersibility of the polyisocyanates,

the emulsifier b) being a reaction product of an aliphatic polyisocyanate with a mono- or polyhydric, nonionic polyalkylene ether alcohol containing at least one polyether chain with at least 10 ethylene oxide units, and

c) the water-borne adhesive consists of an aqueous dispersion optionally containing auxiliaries and additives typically used in adhesives technology and having a solids content of 10 to 65% by weight selected from the group consisting of natural latex, aqueous dispersions of homopolymers or copolymers of olefinically unsaturated monomers and aqueous polyurethane dispersions.

**2.** A water-dispersible polyisocyanate preparation having an average NCO functionality of 2.0 to 3.5, characterized in that it contains

a) uretdione diisocyanates based on 1,6-diisocyanatohexane and/or on 1-isocyanato-3,3,5-trimethyl-5-isocyanatomethyl cyclohexane and/or bis-(6-isocyanatohexyl)-oxadiazine trione, optionally in admixture with other aliphatic polyisocyanates and

b) a quantity of an emulsifier which guarantees the dispersibility of the polyisocyanates,

the emulsifier b) being a reaction product of an aliphatic polyisocyanate with a mono- or polyhydric, nonionic polyalkylene ether alcohol containing at least one polyether chain with at least 10 ethylene oxide units.

## Revendications

**1.** Utilisation de compositions de polyisocyanates dispersables dans l'eau, à une fonctionnalité moyenne en NCO de 2,0 à 3,5, en tant qu'additifs à des colles aqueuses à base de polymères dispersés dans l'eau, caractérisée en ce que :

a) la composition de polyisocyanates contient des polyisocyanates aliphatiques choisis parmi les polyisocyanates portant des groupes isocyanurate, à base du 1,6-diisocyanatohexane et/ou du 1-isocyanato-3,3,5-triméthyl-5-isocyanatométhylcyclohexane, les uret-dione-diisocyanates à base de ces diisocyanates simples, les polyisocyanates portant des groupes uréthanne et/ou allophanate à basede ces diisocyanates simples, les polyisocyanates portant des groupes biuret à base du 1,6-diisocyanatohexane, la bis-(6-isocyanatohexyl)-oxadiazine-trione et les mélanges de ces polyisocyanates, et

b) un agent émulsionnant en quantité suffisante pour assurer la dispersabilité des polyisocyanates,

l'agent émulsionnant b) étant un produit de réaction d'un polyisocyanate aliphatique et d'un polyalkylène-éther-alcool non ionique, mono- ou polyvalent portant au moins une chaîne de polyéther contenant au moins 10 motifs d'oxyde d'éthylène et

c) la colle aqueuse consistant en une dispersion aqueuse, contenant le cas échéant les produits auxiliaires et additifs usuels dans l'industrie des colles, à une teneur en matières solides de 10 à 65 % en poids, prise dans le groupe consistant en le latex naturel, les dispersions aqueuses d'homo- ou copolymères de monomères à insaturation oléfinique et les dispersions aqueuses de polyuréthannes.

**2.** Composition de polyisocyanates dispersable dans l'eau, à une fonctionnalité moyenne en NCO de 2,0 à 3,5, caractérisée en ce qu'elle contient :

a) des uret-dione-diisocyanates à base du 1,6-diisocyanatohexane et/ou du 1-isocyanato-3,3,5-triméthyl-5-isocyanatométhylcyclohexane et/ou de la bis-(6-isocyanatohexyl)-oxadiazine-trione, éventuellement en mélange avec d'autres polyisocyanates aliphatiques, et

b) un agent émulsionnant en quantité suffisante pour assurer la dispersabilité des polyisocyanates,

l'agent émulsionnant b) étant un produit de réaction d'un polyisocyanate aliphatique et d'un polyalkylène-éther-alcool non ionique mono- ou polyvalent à au moins une chaîne de polyéther contenant au moins 10 motifs d'oxyde d'éthylène.